Europäisches Patentamt

(19) European Patent Office

Office européen des brevets

(11) Numéro de publication : **0 060 178
B1**

(12) **FASCICULE DE BREVET EUROPÉEN**

(45) Date de publication du fascicule du brevet :
07.05.86

(51) Int. Cl.⁴ : **C 08 L 23/04, C 08 K 3/34,
C 08 J 5/18**

(21) Numéro de dépôt : **82400332.1**

(22) Date de dépôt : **26.02.82**

(54) Compositions anti-bloquantes à base de polyéthylène et films obtenus.

(30) Priorité : **05.03.81 FR 8104389**

(43) Date de publication de la demande :
**15.09.82 Bulletin 82/37**

(45) Mention de la délivrance du brevet :
**07.05.86 Bulletin 86/19**

(84) Etats contractants désignés :
**AT BE CH DE GB IT LI LU NL SE**

(56) Documents cités :
**FR-A- 1 204 623**
**FR-A- 1 235 862**
**FR-A- 1 497 179**
**FR-A- 2 292 736**
**GB-A-   822 498**

(73) Titulaire : **Société Chimique des Charbonnages
Tour Aurore Place des Reflets Cedex no 5
F-92080 Paris la Défense 2 (FR)**

(72) Inventeur : **Hilt, Edmond
81, Résidence les Hirsons rue Jules Guesdes
F-62800 Liévin (FR)** .

(74) Mandataire : **Dubost, Thierry
SOCIETE CHIMIQUE DES CHARBONNAGES Service
Propriété Industrielle B.P. 57
F-62670 Mazingarbe (FR)**

# 0 060 178

### Description

La présente invention se rapporte à des compositions anti-bloquantes de polyéthylène utiles pour la fabrication de films.

Les films de polymère d'éthylène sont caractérisés par de médiocres propriétés de glissement qui gênent leur emploi dans des appareillages de transformation automatique. Ils sont également caractérisés par une tendance à résister à la séparation par une force d'adhérence qui gêne leur manipulation. Les forces de glissement et les forces d'adhérence de tels films, perpendiculaires entre elles, sont étroitement reliées et sont à l'origine de nombreux problèmes rencontrés dans la mise en œuvre industrielle des films en polyéthylène.

Afin d'améliorer leur aptitude à la mise en œuvre, il est connu d'incorporer aux polymères d'éthylène, avant l'extrusion, un agent glissant et un agent anti-bloquant. Ainsi le brevet britannique n° 822 498 décrit des compositions de polyéthylène comprenant de 0,1 à 5 % en poids d'une charge inerte de granulométrie comprise entre 0,02 et 50 microns. Le brevet français n° 1 204 623 décrit des compositions de polyéthylène ramifié comprenant jusqu'à 0,5 % en poids d'un produit siliceux de granulométrie inférieure à 1 µm. Le brevet français n° 1 235 862 décrit des compositions de polyéthylène comprenant de 0,10 à 1,5 % en poids de silice de granulométrie comprise entre 1 et 10 µm.

La présente invention a pour but d'améliorer les propriétés, notamment optiques, de films fabriqués à partir de polymères d'éthylène en procédant simplement au choix d'un agent anti-bloquant particulier. En poursuivant ce but, on est parvenu au choix du talc comme agent anti-bloquant préféré.

La présente invention a donc pour objet des compositions de polymères d'éthylène comprenant de 200 à 2 500 ppm de talc. Par polymère d'éthylène on entend soit un homopolymère de l'éthylène soit un copolymère de l'éthylène et d'au moins un comonomère choisi parmi les esters vinyliques d'acide carboxylique comme l'acétate de vinyle, le monoxyde de carbone, l'anhydride maléique, les acrylates et méthacrylates d'alkyle dont le groupe alkyle a de 1 à 6 atomes de carbone, ces polymères étant fabriqués sous pression élevée (supérieure à 1 000 bars) en présence d'un initiateur de radicaux libres. Par polymère d'éthylène on entend aussi des copolymères de l'éthylène et d'au moins une α-oléfine ayant de 3 à 8 atomes de carbone, ces copolymères étant fabriqués soit sous pression élevée (supérieure à 300 bars) et à température élevée (supérieure à 160 °C) en présence d'un initiateur de radicaux libres ou d'un système catalytique de type Ziegler, soit en solution ou suspension dans un hydrocarbure sous pression modérée (inférieure à 100 bars) et à température modérée. Les polymères d'éthylène utilisés dans le cadre de la présente invention ont généralement un indice de fluidité compris entre 0,2 et 10 dg/min et une masse volumique comprise entre 0,905 et 0,935 g/cm$^3$ environ.

Le talc utilisable selon l'invention est un minéral de texture lamelleuse, extrait de carrières naturelles, présent dans les schistes cristallins et ayant pour formule chimique 3 MgO, 4 SiO$_2$, H$_2$O.

Il peut en outre contenir des quantités mineures d'autres oxydes métalliques tels que l'alumine ou l'oxyde de fer. Le talc utilisé dans la présente invention a de préférence une granulométrie moyenne comprise entre 1 et 5 µm environ.

Les compositions selon l'invention peuvent en outre comprendre, à titre facultatif, jusqu'à 1 500 ppm d'un agent glissant conventionnel tel qu'un amide d'acide gras insaturé ayant au moins 8 atomes de carbone. A titre d'exemple d'agent glissant on peut citer les amides stéarique, oléique, palmitique, érucique, myristique, béhénique, laurique.

Les compositions selon l'invention font preuve de propriétés remarquables par comparaison avec des compositions comprenant de la silice en quantité équivalente. Les propriétés optiques de films obtenus à partir de ces compositions sont maintenues ou même améliorées en particulier le trouble. Les propriétés anti-bloquantes de ces films sont améliorées aussi bien à température ambiante (20 °C) qu'à chaud (50 °C). Les compositions selon l'invention permettent donc, à performances égales, d'utiliser une moindre quantité d'additif. Enfin le coefficient de friction de films obtenus à partir de ces compositions est très nettement amélioré tant sur la face interne que sur la face externe par rapport aux compositions comprenant une quantité équivalente de silice.

Les compositions selon l'invention sont préparées par dispersion uniforme des ingrédients dans le polymère d'éthylène dans un mélangeur approprié, soit directement dans la quantité voulue soit par l'intermédiaire d'un mélange de concentration plus élevée. Elles sont utiles pour la fabrication de films par extrusion-soufflage ou co-extrusion par les méthodes conventionnelles. De tels films ont une épaisseur généralement comprise entre 7 et 150 µm environ.

Les exemples suivants sont donnés à titre illustratif et non limitatif afin de faire mieux comprendre la présente invention.

### Exemples 1 à 5

On prépare dans un mélangeur, à partir d'un homopolymère d'éthylène d'indice de fluidité 1,2 dg/min mesuré selon la norme ASTM D 1238-73, et de masse volumique 0,920 g/cm$^3$ déterminée selon la norme ASTM D 2839, des compositions homogènes comprenant 250 ppm d'oléamide et, le cas échéant, de la silice ou du talc. La silice utilisée dans les exemples 2 et 4 est une silice synthétique amorphe obtenue par

2

voie humide. Le talc utilisé dans les exemples 3 et 5 est un produit de granulométrie moyenne 3 μm fourni par la Société des Talcs de Luzenac sous l'appellation talc 10 MOOS.

Les différentes compositions sont ensuite extrudées en films de 30 μm d'épaisseur. Sur ces films sont mesurées les propriétés suivantes :

— clarté selon la norme ASTM D-1746 et exprimée en pourcentage.

— trouble selon la norme ASTM D-1003 et exprimé en pourcentage.

— coefficient de friction dynamique selon la norme ASTM D-1894, mesurée sur la face interne et la face externe du film.

— caractère bloquant à température ambiante (20 °C) exprimé en grammes et mesuré selon la norme ASTM D-3354.

Ces propriétés sont indiquées dans le tableau I ci-après. Comme on le comprendra, les exemples 1, 2 et 4 sont comparatifs.

Tableau I

| Exemple | Talc (ppm) | Silice (ppm) | Clarté % | Trouble % | Friction int. | Friction ext. | Bloquant (g) |
|---------|------------|--------------|----------|-----------|---------------|---------------|--------------|
| 1 | 0 | 0 | 55 | 7,5 | 0,35 | 0,15 | 39 |
| 2 | 0 | 250 | 46 | 7,9 | 0,50 | 0,29 | 35 |
| 3 | 250 | 0 | 61 | 6,4 | 0,46 | 0,20 | 31 |
| 4 | 0 | 1000 | 31 | 8,9 | 0,69 | 0,63 | 29 |
| 5 | 1000 | 0 | 55 | 7,1 | 0,30 | 0,19 | 29 |

Exemples 6 à 9

On prépare dans un mélangeur, à partir du polymère d'éthylène utilisé aux exemples précédents, des compositions homogènes comprenant de la silice ou du talc et, le cas échéant, de l'oléamide comme agent glissant (AG). La silice et le talc sont ceux déjà utilisés aux exemples précédents. Les différentes compositions sont extrudées en films de 30 μm d'épaisseur sur lesquels on mesure le caractère bloquant à 50 °C, mesuré selon la méthode décrite précédemment et exprimé en grammes.

Les quantités d'additifs utilisées ainsi que le caractère bloquant sont indiqués dans le tableau II ci-après. Comme on le comprendra, les exemples 6 et 8 sont comparatifs.

Tableau II

| Exemple | 6 | 7 | 8 | 9 |
|---------|------|------|------|------|
| AG (ppm) | 0 | 0 | 1000 | 1000 |
| Talc (ppm) | 0 | 1000 | 0 | 1000 |
| Silice (ppm) | 1000 | 0 | 1000 | 0 |
| Bloquant (g) | 58 | 48 | 36 | 28 |

Exemple 10

On prépare dans un mélangeur, à partir d'un homopolymère d'éthylène d'indice de fluidité 3,1 dg/min (déterminé selon la norme ASTM D 1238-73) et de masse volumique 0,922 g/cm$^3$ (déterminée selon la norme ASTM D-2839), une composition homogène comprenant 900 ppm de talc 10 MOOS et 400 ppm d'oléamide. Cette composition est extrudée en un film de 55 μm d'épaisseur sur lequel on mesure le coefficient de friction dynamique sur la face interne (selon la norme ASTM D-1894), la clarté (selon la norme ASTM D-1746) et la brillance (selon la norme ASTM D-523). Les valeurs de ces propriétés sont les suivantes :

| | |
|---|---|
| Friction | 0,13 |
| Clarté | 56 % |
| Brillance | 98 % |

3

Exemples 11 à 13

On prépare dans un mélangeur, à partir d'un copolymère éthylène/butène-1 d'indice de fluidité 1 dg/min (déterminé selon la norme ASTM D 1238-73) et de masse volumique 0,920 g/cm³ (déterminée selon la norme ASTM D-2839), des compositions homogènes comprenant différentes quantités du talc déjà utilisé aux exemples précédents. Ces compositions sont extrudées en films de 25 μm d'épaisseur sur lesquels on mesure le coefficient de friction dynamique sur la face externe (selon la norme ASTM D-1894) et le caractère bloquant à 70 °C (selon la norme ASTM D-3354). Les valeurs de ces propriétés sont indiquées dans le tableau III ci-après. Comme on le comprendra, l'exemple 11 est comparatif.

Tableau III

| Exemple | 11 | 12 | 13 |
|---|---|---|---|
| Talc (ppm) | 0 | 500 | 2000 |
| Bloquant (g) | 4⁻ | 34 | 13 |
| Friction (externe) | 0,74 | 0,62 | 0,57 |

**Revendications**

1. Composition anti-bloquante à base de polymère d'éthylène, caractérisée en ce qu'elle comprend de 200 à 2 500 ppm de talc.

2. Composition anti-bloquante selon la revendication 1, caractérisée en ce que le polymère d'éthylène est choisi parmi les homopolymères de l'éthylène et les copolymères de l'éthylène et d'au moins un comonomère choisi parmi les esters vinyliques d'acide carboxylique comme l'acétate de vinyle, le monoxyde de carbone, l'anhydride maléique, les acrylates et méthacrylates d'alkyle dont le groupe alkyle a de 1 à 6 atomes de carbone et les oléfines ayant de 3 à 8 atomes de carbone.

3. Composition anti-bloquante selon l'une des revendications 1 et 2, caractérisée en ce que le polymère d'éthylène a un indice de fluidité compris entre 0,2 et 10 dg/min.

4. Composition anti-bloquante selon l'une des revendications 1 à 3, caractérisée en ce que le polymère d'éthylène a une masse volumique comprise entre 0,905 et 0,935 g/cm³.

5. Composition anti-bloquante selon l'une des revendications 1 à 4, caractérisée en ce que le talc contient des quantités mineures d'oxydes métalliques tels que l'alumine ou l'oxyde de fer.

6. Composition anti-bloquante selon l'une des revendications 1 à 5, caractérisée en ce qu'elle comprend de 200 à 1 000 ppm de talc.

7. Composition anti-bloquante selon l'une des revendications 1 à 6, caractérisée en ce que la granulométrie moyenne du talc est comprise entre 1 et 5 μm.

8. Composition anti-bloquante selon l'une des revendications 1 à 7, caractérisée en ce qu'elle comprend en outre jusqu'à 1 500 ppm d'un agent glissant.

9. Composition anti-bloquante selon la revendication 8, caractérisée en ce que l'agent glissant est un amide d'acide gras insaturé ayant au moins 8 atomes de carbone.

10. Film d'épaisseur comprise entre 7 et 150 μm caractérisé en ce qu'il est obtenu par extrusion-soufflage ou co-extrusion à partir d'une composition anti-bloquante selon l'une des revendications 1 à 9.

**Claims**

1. Anti-blocking composition based on ethylene polymer, characterised in that it contains from 200 to 2 500 ppm of talc.

2. Anti-blocking composition according to Claim 1, characterised in that the ethylene polymer is selected from ethylene homopolymers and copolymers of ethylene with at least one co-monomer selected from carboxylic acid vinyl esters such as vinyl acetate, carbon monoxide, maleic anhydride, alkyl acrylates and methacrylates in which the alkyl group has from 1 to 6 carbon atoms, and olefins having from 3 to 8 carbon atoms.

3. Anti-blocking composition according to one of Claims 1 and 2, characterised in that the ethylene polymer has a melt index of between 0.2 and 10 dg/min.

4. Anti-blocking composition according to one of Claims 1 to 3, characterised in that the ethylene polymer has a density of between 0.905 and 0.935 g/cm³.

5. Anti-blocking composition according to one of Claims 1 to 4, characterised in that the talc contains minor amounts of metal oxides such as as alumina or iron oxide.

4

6. Anti-blocking composition according to one of Claims 1 to 5, characterised in that it contains from 200 to 1 000 ppm of talc.

7. Anti-blocking composition according to one of Claims 1 to 6, characterised in that the average particle size of the talc is between 1 and 5 m.

8. Anti-blocking composition according to one of Claims 1 to 7, characterised in that it also contains to 1 500 ppm of a slip agent.

9. Anti-blocking composition according to Claim 8, characterised in that the slip agent is an unsaturated fatty acid amide having at least 8 carbon atoms.

10. Film having a thickness of between 7 and 150 $\mu$m, characterised in that it is obtained by extrusion-blowing or co-extrusion from an anti-blocking composition according to one of Claims 1 to 9.

**Patentansprüche**

1. Antiblocking-Zusammensetzung auf Basis von Äthylenpolymer, dadurch gekennzeichnet, daß es 200 bis 2 500 ppm Talcum enthält.

2. Antiblocking-Zusammensetzung nach Anspruch 1, dadurch gekennzeichnet, daß das Äthylenpolymer ausgewählt ist aus den Äthylenhomopolymeren und den Copolymeren des Äthylens und mindestens eines Comonomers ausgewählt aus der Gruppe bestehend aus den Vinylestern von Karbonsäure, wie Vinylacetat, aus Kohlenmonoxid, aus Maleinsäureanhydrid, aus den Alkylacrylaten und -methacrylaten, deren Alkylgruppe 1 bis 6 Kohlenstoffatome besitzt, und aus den Olefinen mit 3 bis 8 Kohlenstoffatomen.

3. Antiblocking-Zusammensetzung nach Anspruch 1 oder 2, dadurch gekennzeichnet, daß das Äthylenpolymer einen Fließindex zwischen 0,2 und 10 dg/min besitzt.

4. Antiblocking-Zusammensetzung nach einem der Ansprüche 1 bis 3, dadurch gekennzeichnet, daß das Äthylenpolymer eine Dichte zwischen 0,905 und 0,935 g/cm$^3$ besitzt.

5. Antiblocking-Zusammensetzung nach einem der Ansprüche 1 bis 4, dadurch gekennzeichnet, daß das Talcum geringe Mengen an Metalloxiden, wie Aluminiumoxid oder Eisenoxid, enthält.

6. Antiblocking-Zusammensetzung nach einem der Ansprüche 1 bis 5, dadurch gekennzeichnet, daß sie 200 bis 1 000 ppm Talcum enthält.

7. Antiblocking-Zusammensetzung nach einem der Ansprüche 1 bis 6, dadurch gekennzeichnet, daß die mittlere Korngröße des Talcums zwischen 1 und 5 $\mu$m liegt.

8. Antiblocking-Zusammensetzung nach einem der Ansprüche 1 bis 7, dadurch gekennzeichnet, daß sie weiters bis 1 500 ppm eines Gleitmittels enthält.

9. Zusammensetzung nach Anspruch 8, daß das Gleitmittel ein ungesättigtes Fettsäureamid mit mindestens 8 Kohlenstoffatomen ist.

10. Film einer Dicke zwischen 7 und 150 $\mu$m, dadurch gekennzeichnet, daß er durch Extrusionsblasen oder Koextrusion aus einer Antiblocking-Zusammensetzung nach einem der Ansprüche 1 bis 9 erhalten wurde.